# EUROPÄISCHE PATENTSCHRIFT

(11) **EP 2 507 399 B1**
(45) Veröffentlichungstag und Bekanntmachung des Hinweises auf die Patenterteilung: **11.02.2015**
(21) Anmeldenummer: 10784808.7
(22) Anmeldetag: 02.12.2010
(51) Int. Cl.: C21D 8/02, C21D 8/04, C21D 9/48, C21D 11/00, B21B 37/74, C21D 9/60

(54) **WARMWALZWERK UND VERFAHREN ZUM WARMWALZEN EINES METALLBANDES ODER -BLECHS**
HOT ROLLING MILL AND METHOD FOR HOT ROLLING A METAL STRIP OR SHEET
LAMINOIR À CHAUD ET PROCÉDÉ DE LAMINAGE À CHAUD D'UN FEUILLARD OU D'UNE TÔLE

(30) Priorität: 02.12.2009 DE 102009057524
(43) Veröffentlichungstag der Anmeldung: 10.10.2012
(73) Patentinhaber: SMS Siemag AG, 40237 Düsseldorf (DE)
(72) Erfinder: KLINKENBERG, Christian, 58313 Herdecke (DE); BILGEN, Christian, 40476 Düsseldorf (DE); ROSENTHAL, Dieter, 57572 Niederfischbach (DE); KLEIN, Christoph, 57223 Kreuztal-Eichen (DE)
(74) Vertreter: Klüppel, Walter
(86) Internationale Anmeldenummer: PCT/EP2010/068691
(87) Internationale Veröffentlichungsnummer: WO 2011/067315

(56) Entgegenhaltungen:
- EP-A1- 0 771 596
- EP-A1- 1 001 041
- EP-A2- 0 870 553
- WO-A1-2007/073841
- WO-A2-2007/051521
- DE-A1- 4 402 402
- DE-A1-102008 020 412
- US-A1- 2005 115 649

## Beschreibung

Die Erfindung betrifft ein Verfahren zum Warmwalzen eines Metallbandes oder Metallblechs, insbesondere eines Stahlbandes oder -blechs, wobei
1.a) die Bramme bzw. das Band oder Blech in einem ersten Schritt einer oder mehrerer Umformungen in einem Warmwalzwerk zur Erzeugung eines gleichmäßigen, feinkörnigen Austenitgefüges unterzogen wird und
2) die Bramme bzw. das Band oder Blech dann in einem zweiten Schritt zur Erzeugung eines feinkörnigen Gefüges einer Abkühlung unterzogen wird.

Die Herstellung von Stahlband oder Stahlblech durch Warmwalzen ist im Stand der Technik hinlänglich beschrieben.

So beschreibt die WO 2007/051521 A2 ein Verfahren und eine Fertigwalzstraße zum Warmwalzen von Eingangsmaterial.

Die Druckschrift EP 1 001 041 A1 beschreibt ein warmgewalztes Stahlblech mit einer ultrafeinen Kornstruktur und ein Verfahren zum Herstellen dieses Stahlblechs.

In der Druckschrift DE 44 02 402 A1 ist eine Verfahren und eine Anlage zur Herstellung von warmgewalztem Stahlband aus stranggegossenem Vormaterial beschrieben.

Die US 2005/0115649 A1 beschreibt ein Verfahren zum Warmwalzen von hochfestem niedriglegierten Stahl.

Entsprechende Offenbarungen finden sich beispielsweise in dem Beitrag von P. Uranga, A. I. et al. "Improvement of Microstructural Homogeneity in Themomechanical Processed Nb Steels by Thin Slab Casting" 43rd Mechanical Working and Steel Processing Conference, Charlotte, ISS, Vol. 39, Seiten 511 bis 529; im Beitrag von C. Klinkenberg, et al. "Processing of Niobium Microalloyed API Grade Steel on a Thin Slab Plant", Materials Science Forum Vols. 500 bis 501, 2005, Seiten 253 bis 260, und im Beitrag von S. V. Subramanian, et al. "Process modeling of microalloyed steel for near net shape casting" Proc. Of the Int. Conf. On Thermomechanical Processing: "Mechanics, Microstructure ed. by E. J. Palmiere et al., The University of Sheffield, Sheffield, 2003, Seiten 148 bis 156.

Eine typische Anwendung des thermomechanischen Verfahrens (TM-Verfahren) ist zur Erzeugung von warmgewalztem Stahlband und -blech aus mikrolegierten Stählen. Eine solche TM-Behandlung besteht in der Regel aus den folgenden Schritten:
In einem ersten Schritt 1.a) erfolgen eine oder mehrere Umformungen des austenitischen Ausgangsgefüges in rekristallisierenden Temperaturbereich zur Erzeugung eines gleichmäßigen, feinen, rekristallisierten Austenitgefüges. Dann können in einem Schritt 1.b) eine oder mehrere Umformungen des rekristallisierten, austenitischen Gefüges zur Erzeugung eines möglichst flachgestreckten, versetzungsreichen, nicht rekristallisierten Austenitgefüges (so genanntes Pan-Cake-Gefüge) erfolgen. Dieser erste Schritt wird auch als Konditionierung des Austenits bezeichnet.

Schließlich erfolgt in einem zweiten Schritt die Abkühlung des Mittels des ersten Schritts konditionierten austenitischen Gefüges, zur Erzeugung eines feinkörnigen Gefüges im fertigen Warmband bzw. Warmblech bei der Phasenumwandlung.

Das Gefüge des fertigen Warmbandes bzw. Warmblechs besteht aus der Kombination von Ferrit, Perlit, Bainit und Martensit, wobei der Gehalt dieser vier Gefügekomponenten jeweils zwischen 0 % und 100 % betragen kann.

Der vorgenannten Beschreibung des TM-Verfahrens folgend, kann auch auf den vorgenannten Schritt 1.b) der Umformung im nicht rekristallisierenden Temperaturbereich des Austenits verzichtet werden. In diesem Fall findet die Konditionierung des Austenits vollständig im rekristallisierenden Temperaturbereich des Austenits statt.

Die Schwierigkeit beim thermo-mechanischen Warmwalzen besteht jedoch darin, dass zur Erzeugung des gleichmäßig fein rekristallisierten Austenitkoms im rekristallisierenden Bereich (obiger Schritt 1.a) eine möglichst große Umformung aufgebracht werden muss. Ein fein rekristallisiertes Gefüge zeichnet sich dadurch aus, dass sowohl die ehemalige, ungleichmäßige Gussstruktur als auch einzelne grobe Körner oder Gefügebereiche vollständig in ein gleichmäßiges, fein rekristallisertes Gefüge mit kleiner Streuung um die mittlere Korngröße überführt werden. Häufig wird diese Bedingung nicht oder nicht vollständig erfüllt und führt zu einem unzureichend konditionierten Austenitgefüge.

Schließt sich im ersten Schritt der Warmwalzung 1.a) im rekristallisierenden Temperaturbereich des Austenits, ein Schritt 1.b) im nicht rekristallisierenden Temperaturbereich des Austenits an, verbleibt bei einem großen Verhältnis der Dicke des fertigen Warmbandes bzw. Warmblechs und der Dicke der Bramme oder des Zwischenbandes oft nur wenig Restumformung für die nachfolgenden Umformungen im genannten Schritt 1.b) der thermomechanischen Behandlung.

Selbst beim Abschalten einzelner Gerüste genügt dieses mitunter nicht, um eventuell noch vorhandene Reste der Gussstruktur sowie einzelne grobe Körner oder Gefügebereiche in ein gleichmäßiges flaches Pan-Cake-Gefüge aus nicht rekristallisierten Austenitkömem zu überführen. Auch in diesem Fall liegt ein unzureichend konditionierter Austenit vor.

Unzureichend konditionierter Austenit führt in nachteiliger Weise im fertigen Warmband bzw. Warmblech zu einzelnen gröberen Körnern außerhalb der Normalverteilung um die mittlere Korngröße und/oder zu Gefügebereichen, deren Substruktur durch Kleinwinkelkorngrenzen gekennzeichnet ist. Derartige Gefügebereiche führen aber zu schlechteren mechanischen Eigenschaften des fertigen Bandes oder Blechs, insbesondere zu einer verminderten Zähigkeit.

Entsprechend der vorab gegebenen Beschreibung des TM-Verfahrens kommt im oben genannten Schritt 1.a) des Verfahrens, der Verformung im rekristallisierenden Bereich des Austenits, entscheidende Bedeutung für die Eigenschaften des fertigen Stahlbandes oder -blechs zu. Der im Schritt 1.a) der thermo-mechanischen Behandlung erforderliche Umformgrad kann zwar zum Teil durch eine angehobene Einlauftemperatur ersetzt werden. Diese Möglichkeit ist aber begrenzt durch die maximale Ofentemperatur sowie durch die Abkühlung beim Walzenkontakt sowie durch thermische Abstrahlung zwischen den Gerüsten, wenn an diesem Schritt mehrere Gerüste beteiligt sind.

Der vorliegenden Erfindung liegt ausgehend von dem Stand der Technik daher die Aufgabe zugrunde, ein Verfahren der eingangs genannten Art vorzuschlagen, dass die genannten Nachteile vermeidet. Demgemäß soll eine kostengünstige Erzeugung von insbesondere thermo-mechanisch gewalztem Stahlband bzw. Stahlblech unter gleichzeitiger Verbesserung des Gefüges und der mechanischen Eigenschaften ermöglicht werden.

Eine weitere Aufgabe der vorliegenden Erfindung ist, Anlagenkonzepte zur Verfügung zu stellen, die in der Lage sind, das erfindungsgemäße Verfahren auszuführen und in ihrer Struktur und Einsatzvielfalt besonders einfach sind und überdies nur ein geringen Bauraum erfordern.

Die Aufgabe wird durch den Gegenstand des Anspruchs 1 gelöst. Die Lösung dieser Aufgabe durch die Erfindung ist verfahrensseitig dadurch gekennzeichnet, dass bei der Durchführung des oben genannten Schritts 1.a) die Bramme bzw. das Band oder Blech in einem ersten Schritt 1.a) einer oder mehrerer Umformungen in einem eine Reihe von Walzgerüsten (F1, F2, F3, F4) umfassenden Warmwalzwerk zur vollständigen Eliminierung der Gussstruktur und zur Erzeugung eines gleichmäßigen, feinen, rekristallisierten Austenitsgefüges mit einer Korngröße von 40 µm ± 20 µm, und bei mikrolegierten Stählen von 30 µm ± 10 µm, unterzogen wird, wobei am Ende dieses Schrittes zugegebene Mikro-Legierungselemente > 90 % des jeweiligen Analysegehaltes in Lösung gegangen sind, und in einem Schritt 2.) die Bramme bzw. das Band oder Blech dann zur Erzeugung eines feinkörnigen Gefüges, bei dem keine einzelnen groben Körner oder größere Gefügebereiche vorliegen, deren Korngrenzen und/oder Substruktur durch Kleinwinkelkorngrenzen gekennzeichnet sind, einer Abkühlung unterzogen wird.

Zwischen mindestens zwei Walzgerüsten (F1, F2) des Warmwalzwerks wird bei der Durchführung des Schritts 1.a) die Bramme bzw. das Band oder Blech einer Erhitzung unterzogen, und wobei zumindest in dem in Walzrichtung (W) ersten Walzgerüst, vorzugsweise ein Vorgerüst (F0), die obere und untere Arbeitswalze (F0a, F0b) über separate Antriebe angetrieben wird, wobei direkt nach dem Austritt aus dem Vorgerüst F0 das Band in eine Induktionsheizung und anschließend mittels wenigstens einem Treiberrollenpaar gezogen wird.

Die Bramme bzw. das Band oder Blech wird in einem Schritt 1.b) zwischen den Schritten 1.a) und 2) einer oder mehreren Umformungen des rekristallisierten, austenitischen Gefüges zur Erzeugung eines flachgestreckten, versetzungsreichen Austenitgefüges unterzogen, wobei die Erhitzung bis in den rekristallisierenden Temperaturbereich, insbesondere bis zur vollständigen Rekristallisation erfolgt.

Vorzugsweise wird die Umformung in allen beteiligten Gerüsten oberhalb von 1000°C, nämlich der bevorzugten Gerüsteinlauftemperatur, durchgeführt. Hierdurch wird vorteilhaft gewährleistet, dass durchgehend im rekristallisierenden Bereich gewalzt wird, demnach sämtliche Umformungen zu einem rekristallisierten Gefüge führen.

Vorzugsweise werden in allen beteiligten Gerüsten relative Stichabnahmen von bevorzugt ≥25% durchgeführt. Hierdurch wird vorteilhaft sichergestellt, dass durch die hohe, in das Material eingebrachte Versetzungsdichte sowie durch die hiermit verbundene Materialerwärmung aufgrund innerer Reibung ebenfalls durchgehend im rekristallisierenden Bereich gewalzt wird.

Vorzugsweise liegt am Ende des Schritts 1.a) ein vollständig rekristallisiertes, feinkörniges austenitisches Gefüge mit nur kleiner Streuung um die mittlere Korngröße vor. Ausgehend von einem Gussgefüge mit einem mittleren Korndurchmesser von üblicherweise 500 bis 2000 µm, bei dem die großen Körner insbesondere in der Brammenmitte auftreten, werden erfindungsgemäße rekristallisierte Gefüge mit einer Korngröße von 40 µm ± ca. 20 µm erzielt. Insbesondere bei mikrolegierten Stählen, vor allem API-Güten, lassen sich die erfindungsgemäßen Korngrößen von 30 µm ± ca. 10 µm erhalten.

Am Ende des Schritts 1.a liegen keine Reste der Gussstruktur vor. Am Ende des Schritts 1.a) sind ggf. zugegebene Mikrolegierungselemente zumindest nahezu vollständig in Lösung, insbesondere > 90% des jeweiligen Analysegehalts.

Als Erhitzung im erfindungsgemäßen Sinne werden alle gezielt durchgeführten Maßnahmen verstanden, bei denen Temperaturverluste zwischen den Gerüsten soweit kompensiert werden, dass bei gegebener Verformung, Zwischengerüstzeit und Ausgangskorngröße eine vollständige Rekristallisation und Eliminierung der Gusstruktur stattfindet.

Vorzugsweise wird die zur vollständigen Rekristallisation und Eliminierung der Gussstruktur erforderliche eingebrachte Energie durch eine geeignete Kombination von Umformenergie, thermischer Energie und Zwischengerüstzeit so eingebracht, dass eine vollständige Rekristallisation und Eliminierung der Gusstruktur stattfindet.

Zum Ermöglichen der vollständigen Rekristallisation des Austenits in allen am Schritt 1.a) beteiligten Gerüsten wird erfindungsgemäß das Band oder Blech zwischen dem ersten und zweiten Gerüst oder nachfolgenden Gerüsten, einer Erhitzung unterzogen. Unter Erhitzung wird hierbei eine solche Erwärmung des Bandes 1 verstanden, dass eine gezielte Temperaturführung eingestellt werden kann. Dies kann auch eine Aufrechterhaltung der Temperatur des Bandes 1 auf einem gewünschten, gleichbleibenden Niveau (Kompensation des Temperaturverlusts zwischen den Gerüsten) oder aber eine verminderte Abkühlung des Bandes 1 mittels geeigneter Heizelemente umfassen.

Anlagenseitig wird die Aufgabe durch ein Warmwalzwerk zum Warmwalzen eines Metallbandes oder -blechs gelöst, bei dem zwischen mindestens zwei der am Schritt 1.a) beteiligten Walzgerüste eine Heizung zur Erwärmung des Walzgutes angeordnet ist.

Die Erhitzung erfolgt dabei bevorzugt mittels Induktion. Sie erfolgt bevorzugt bis in den rekristallisierenden Temperaturbereich hinein, insbesondere bis zur vollständigen Rekristallisation des Walzguts und bis zur vollständigen Eliminierung der Gussstruktur.

Nach der Erhitzung gemäß obigem Schritt 1.a) und vor der Durchführung des optionalen Schritts 1.b) kann eine Kühlung der Bramme bzw. des Bandes oder Blechs erfolgen. Die Kühlung der Bramme bzw. des Bandes oder Blechs erfolgt dabei bevorzugt in den nicht rekristallisierenden Temperaturbereich hinein.

Nachdem sich der Umformung gemäß oben genanntem Schritt 1.a) eine Umformung gemäß Schritt 1.b) anschließt, erfolgt nach der Umformung entsprechend 1.a), eine Zwangskühlung, bevorzugt mit Wasser, in den nicht rekristallisierenden Temperaturbereich des Austenits hinein. Dieser Temperaturbereich variiert abhängig von der Stahlanalyse, dem Umformgrad und der Stichzwischenzeit. Hierzu wird nach der Umformung entsprechend Schritt 1.a, optional ein Gerüst aufgefahren und vor und/oder hinter dem folgenden Gerüst das Zwischenband intensiv gekühlt, so dass die Einlauftemperatur für den Umformvorgang gemäß Schritt 1.b) bei einer Temperatur unterhalb der Rekristallisationstemperatur des verformten Austenits, vorzugsweise <1000°C, besonders bevorzugt <900°C, stattfindet.

Schließlich erfolgt in einem zweiten Schritt die Abkühlung des Mittels des ersten Schritts konditionierten austenitischen Gefüges, zur Erzeugung eines feinkörnigen Gefüges im fertigen Warmband bzw. Warmblech.

Nach der Fertigstellung des Warmbandes oder -blechs zeigt dessen Gefüge vorzugsweise ausschließlich einen und/oder Kombinationen der Bestandteile Austenit, Ferrit, Perlit, Bainit und Martensit, wobei der Gehalt dieser Gefügekomponenten jeweils zwischen 0 % und 100 % betragen kann. Die Mikrostruktur zeichnet sich insbesondere dadurch aus, dass keine einzelnen groben Körner oder größere Gefügebereiche vorliegen, deren Korngrenzen und/oder Substruktur durch Kleinwinkelkorngrenzen gekennzeichnet sind.

Das Verfahren zeichnet sich ferner dadurch aus, dass vorzugsweise eine Dünnbramme als Ausgangsprodukt verwendet wird, die vorzugsweise eine Gießdicke von ≤ 120 mm aufweist, und/oder dass diese Dünnbramme vorzugsweise direkt aus der Gießhitze heraus verarbeitet wird.

Anlagenseitig wird vorzugsweise als Walzanlage eine mehrgerüstige Konti-Straße verwendet und innerhalb dieser werden die Verfahrensschritte 1.a Walzen bei hoher Temperatur mit Unterstützung der Induktionsheizung, Kühlen und 1.b Walzen bei niedriger Temperatur angewendet. Es wird hier also kein Vorgerüst bzw. Grobblechgerüst eingesetzt, wie dies aus dem Stand der Technik bekannt ist.

Vorzugsweise sind die Umformschritte, bestehend aus den Teilschritten 1.a und 1.b, gekoppelt, das heißt alle beteiligten Gerüste sind nach dem Brammen bzw. Zwischenbandeinlauf gleichzeitig im Eingriff. Hierbei werden die Walzgerüste im Tandembetrieb gefahren, somit in einer Betriebsweise, bei der die Brammen oder das Zwischenband gleichzeitig durch sämtliche Walzgerüste hindurchtritt. Einzelne Gerüste können hierbei aber auch aufgefahren werden und demnach nicht an der Umformarbeit teilnehmen.

Das erfindungsgemäße Verfahren ist flexibel anwendbar ist, das heißt auch für das Herstellen dünner Enddicken. Hierbei wird das dritte Gerüst aktiv zur Walzung genutzt.

Zudem kann im Endlosbetrieb der gegossene Strang nicht durch Querteilen zu Brammen aufgeteilt werden, sondern vielmehr kontinuierlich, vorzugsweise durch einen Tunnelofen, dem Warmwalzwerk zugeführt, zu Warmband fertiggewalzt, gekühlt und erst vor dem Haspel quergeteilt und anschließend zu Coils aufgewickelt werden. Diese Fahrweise vermindert den Schrottanfall, da keine Kopf- und Fußenden am Band entstehen. Zusätzlich können auch dünnere Banddicken, vorzugsweise < 1 mm Dicke, erzeugt werden, da die Gefahr von Hochgehem (Cobbles) beim Einlaufen dünner Bänder in die letzten Gerüste des Warmwalzwerks auf das Anfahren beschränkt wird. Beim Endloswalzen ist die Einzugsgeschwindigkeit des ersten aktiven Gerüsts auf die Gießgeschwindigkeit reduziert, was zu erhöhten Temperaturverlusten vor und/oder während der Warmwalzung führen kann. Daher sind zur Walzung gemäß oben genanntem Schritt 1, höhere Walztemperaturen erforderlich, um Walzendtemperaturen in der Ferritphase und/oder im Zweiphasengebiet Austenit plus Ferrit zu vermeiden.

Das erfindungsgemäße Verfahren erlaubt auch das Herstellen von Stahlsorten mit reduziertem Austenit-Phasengebiet, beispielsweise mit Silizium-Gehalten > 1,0%. Hier sind zur Walzung gemäß oben genanntem Schritt 1.a, vorzugsweise 1.a und 1.b, höhere Walztemperaturen erforderlich, um Walzendtemperaturen in der Ferritphase und/oder im Zweiphasengebiet Austenit plus Ferrit zu vermeiden.

Das Warmwalzwerk zum Warmwalzen eines Metallbandes oder -blechs, insbesondere eines Stahlbandes oder -blechs, gemäß der Erfindung, bei dem mindestens zwei in Walzrichtung aufeinander folgend angeordnete Walzgerüste vorliegen, in denen jeweils die Bramme bzw. das Band oder Blech einer Umformung unterzogen werden kann, zeichnet sich dadurch aus, dass zwischen mindestens zwei der mindestens zwei Walzgerüste eine Heizung zur Erwärmung des Walzgutes angeordnet ist.

Die Heizung ist dabei bevorzugt als Induktionsheizung ausgebildet, insbesondere mit bis zu 4 Induktorelementen. Das Ziel ist bei der Projektierung der Induktorheizung regelmäßig eine möglichst kompakte Bauform mit hoher Leistungsdichte. Diese Leistungsdichte liegt vorzugsweise in einem Bereich von wenigstens 3.000 MW/m², vorzugsweise bei wenigstens 4.000 MW/m², bemessen an der Leistungsdichte, die tatsächlich im Band induziert wird. Als Induktorelement wird dabei dasjenige Bauelement bezeichnet, über das die Leistung in das Band eingebracht wird. Eine Mehrzahl von Induktorelementen kann somit eine Induktionsheizung bilden.

Zwischen zwei weiteren Walzgerüsten oder nach mindestens einem weiteren Walzgerüst kann zudem eine Kühlstrecke für die Bramme bzw. das Band oder Blech angeordnet sein. Sofern zum nachfolgenden Gerüst ein hinreichender Abstand vorhanden ist, kann auch gemäß einer weiteren Ausgestaltung der Erfindung vorgesehen sein, dass in Walzrichtung unmittelbar hinter der Heizung die Kühlstrecke für die Bramme bzw. das Band oder Blech angeordnet ist.

Demgemäß stellt die Erfindung bevorzugt auf den Einbau einer Schnellaufheizung (Mikro-Booster), beispielsweise in Form von induktiven Heizelementen, zwischen einzelnen Gerüsten des Warmwalzwerks, ab. Damit wird es möglich, mit relativ niedriger Temperatur (gegebenenfalls auch im nicht rektristallisierenden Temperaturbereich) mit der Bramme bzw. dem Band oder Blech in die Warmbandstraße einzulaufen. In den ersten Gerüsten (F0 und eventuell auch F1 oder F2) wird bei behinderter Rekristallisation Verformungsenergie gespeichert. Zwischen dem ersten und dem zweiten Gerüst (zwischen F0 und F1) oder auch zwischen dem zweiten und dem dritten Gerüst (zwischen F1 und F2) wird das Zwischenband mittels der vorgesehenen Heizelemente aufgeheizt, und zwar gezielt in den rekristallisierenden Temperaturbereich hinein.

Nach Umformung und vollständiger Rekristallisation, gemäß oben genanntem Schritt 1.a, wird das Zwischenband mittels einer Zwischengerüstkühlung in den nicht rekristallisierenden Temperaturbereich abgekühlt und entsprechend des oben genannten Schritts 1.b gewalzt.

So wird eine angepasste Temperaturfühlung zur Erzeugung eines optimal konditionierten austenitischen Gefüges während der thermomechanischen Behandlung erzielt.

Mit der vorgeschlagenen Lösung ergibt sich in vorteilhafterweise ein kostengünstiges thermo-mechanisches Warmwalzverfahren zur Erzeugung warmgewalzten Stahlbandes bzw. Stahlblechs mit einem verbesserten Gefüge und verbesserten mechanischen Eigenschaften. Die mit der Heizung gezielt mögliche Temperaturführung der Bramme bzw. des Bandes oder Blechs eröffnet unter anderem ein Einsparpotential bei Mikrolegierungselementen und Walzenergie. Zudem kann das erfindungsgemäße Verfahren problemlos durch nur geringfügige bauliche Änderungen an vorhandenen Warmbandstraßen und durch eine entsprechende Nachrüstung derselben angewendet werden.

Hierbei eröffnet sich ein weiterer besonderer Vorteil der Erfindung durch die besondere Flexibilität bei der Nachrüstung unter Neuprojektierung von Warmbandstraßen aufgrund der geringen Baulänge der Einzelkomponenten und der Vielfalt an möglichen Einsatzaggregate in Kombination mit der Heizung zwischen wenigstens zwei Walzgerüsten. Insbesondere können Vorrichtungen zur Eliminierung oder zumindest Minimierung des Ski-Ups, Treiberrollenpaare, Kühlungen, Zunderwäscher, Scheren oder dergleichen an geeigneter Stelle in die Warmbandstraße implementiert werden, wodurch mit nur geringem Aufwand eine Vielzahl vorteilhafter Effekte bewirkt werden kann.

Somit kann die Erfindung nicht nur in vorhandenen Warmbandstraßen eingebaut werden, sondern es wird auch eine kostengünstige Auslegung einer neuen Fertigungsanlage für eine geringere Brammendicke und/oder mit schwächeren Walzgerüsten, insbesondere der Gerüste F0, F1 und F2, ermöglicht.

In den Figuren sind mehrere Ausführungsbeispiele der Erfindung dargestellt. In den Figuren zeigt:
- Figur 1: schematisch ein Warmwalzwerk für die thermo-mechanische Bearbeitung einer Bramme zur Herstellung eines Warmgewalzten Stahlbandes in einem ersten Ausführungsbeispiel,
- Figur 2: ein zweites Ausführungsbeispiel der Erfindung, in dem zwischen zwei Gerüsten einer schematisch dargestellten Warmbandstraße eine Induktionsheizung und ein Treiberrollenpaar angeordnet ist,

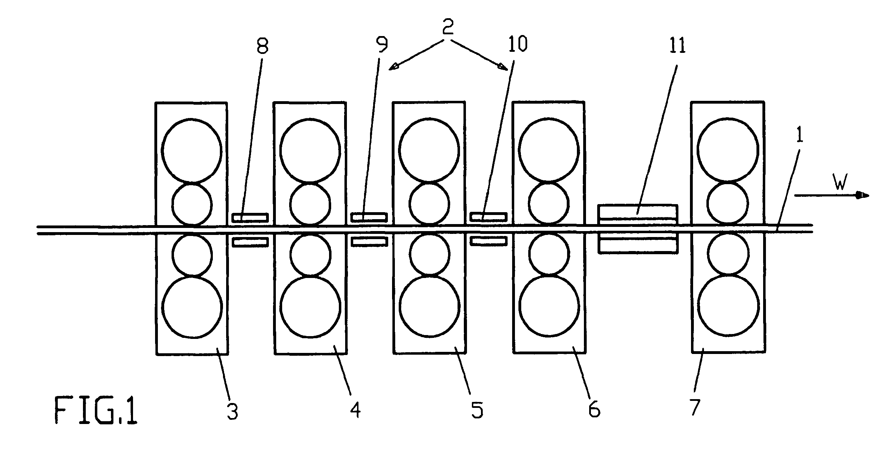

In Figur 1 ist ein Warmwalzwerk 2 skizziert, in dem ein Band 1 gewalzt werden kann. Hierfür ist eine Anzahl Walzgerüste 3, 4, 5, 6, 7 (auch genannt: F0, F1, F2, F3 und F4) vorhanden, mit denen das Band 1 einzeln in Walzrichtung W gefördert und dabei in bekannter Weise gewalzt werden kann. Das Band 1 wird beim Warmwalzen einer thermo-mechanischen Bearbeitung unterzogen, um ein warmgewalztes Stahlband zu erzeugen. Dargestellt ist nur der erste Schritt der thermo-mechanischen Behandlung. Hiernach wird das Band 1 einer Anzahl Umformungen unterzogen, die durch die einzelnen Walzgerüste 3, 4, 5, 6, 7 vorgenommen werden. Hierbei wird das austenitische Ausgangsgefüge ausreichend erhitzt, so dass es sich im rekristallisierenden Temperaturbereich befindet. Hierdurch wird in bekannter Weise die Erzeugung eines gleichmäßigen, feinen rekristallisierten Austenitgefüges erzielt. Nicht mehr dargestellt - diese Schritte schließen sich an den in der Figur 1 dargestellten Anlagenteil an - ist, dass in einem oben genanntem Schritt 1.b eine oder mehrere Umformungen des rekristallisierten austenitischen Gefüges im nicht rekristallisierenden Temperaturbereich zur Erzeugung eines so genannten Pan-Cake-Gefüges erfolgen kann. In einem weiteren Schritt 2 erfolgt eine Abkühlung des entsprechend Schritt 1.a und 1.b konditionierten austenitischen Gefüges. Damit kann bei der nachfolgenden Phasenumwandlung vom Austenit zum Ferrit ein feinkörniges Gefüge hergestellt werden. Wesentlich hierbei ist, dass im Zuge der Durchführung des genannten Schritts 1.a, zwischen mindestens zwei Walzgerüsten, vorliegend zwischen dem Walzgerüsten 3 und 4, 4 und 5 sowie 5 und 6, im Warmwalzwerk 2 das Band 1 einer Erhitzung unterzogen wird. Unter Erhitzung wird hierbei eine solche Erwärmung des Bandes 1 verstanden, dass eine gezielte Temperaturführung eingestellt werden kann. Dies kann auch eine Aufrechterhaltung der Temperatur des Bandes 1 auf einem gewünschten, gleich bleibenden Niveau oder aber eine verminderte Abkühlung des Bandes 1, mittels geeigneter Heizelemente, umfassen. Hierfür sind Induktions-Heizelemente 8, 9 und 10 vorgesehen, mit denen die Temperatur des Bandes 1 in kurzer Zeit auf die gewünschte Weise eingestellt werden kann, nämlich auf eine solche, bei der die vollständige Rekristallisation erfolgt. Hinter dem Walzgerüst 6 und vor dem Walzgerüst 7 ist indessen eine Kühlstrecke 11 angeordnet, mit der das Band 1 wiederum auf eine gewünschte Temperatur abgekühlt werden kann, nämlich auf eine Temperatur, die im nicht rekristallisierenden Bereich liegt.

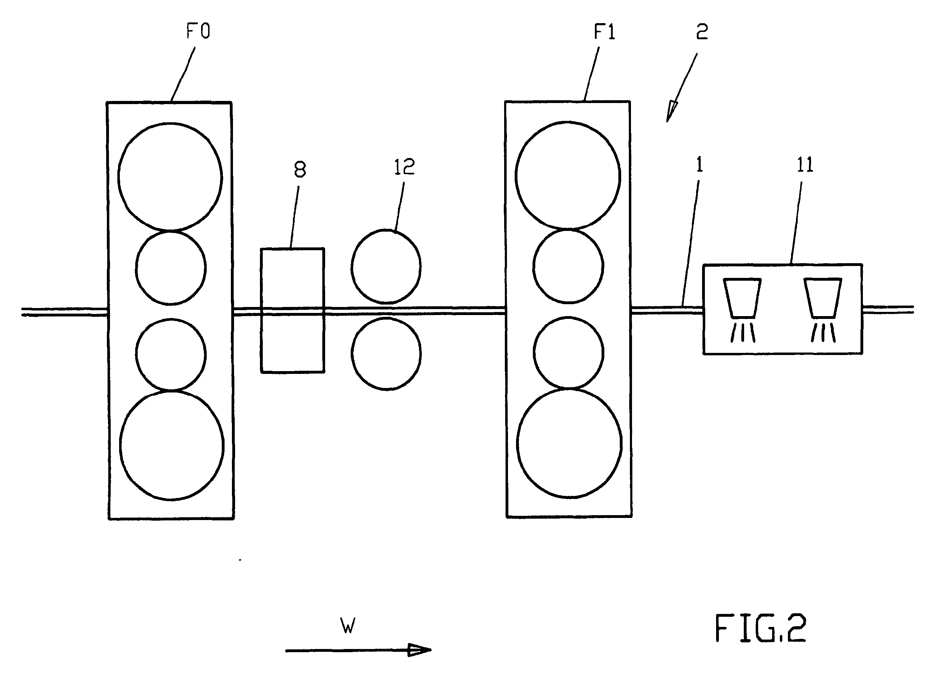

Figur 2 zeigt einen Teil eines Warmwalzwerks 2 in einer Ausführungsform gemäß der Erfindung, bei dem das Metallband 1 durch einen als F0 bezeichnetes erstes Walzgerüst und ein als F1 bezeichnetes zweites Walzgerüst verläuft. Direkt nach Austritt aus dem Vorgerüst F0 läuft das Band 1 in eine Induktionsheizung 8 und anschließend in ein Treiberrollenpaar 12 ein. Durch dieses Treiberrollenpaar 12 wird eine Minimalzugregelung auf das Band 1 aufgebracht und zudem auf dem Band 1 verbleibendes Wasser leicht abgequetscht. Ein solches Treiberrollenpaar 12 ist somit als Alternativlösung zu einem (nicht dargestellten) Looper zu sehen, in dem leichte Schwankungen im Bandzug oder in der Bandlänge aufgefangen werden können. Schließlich ist in Walzrichtung W hinter dem Walzgerüst F1 eine Kühlstrecke 11 angeordnet, über die das in der Heizvorrichtung 8 auf eine Temperatur oberhalb der Rekristallisationstemperatur aufgeheizte Band 1 in einen Temperaturbereich im nicht rekristallisierenden Bereich abgekühlt werden kann.

## Patentansprüche

1. Verfahren zum Warmwalzen eines Metallbandes (1) oder -blechs, insbesondere eines Stahlbandes oder -blechs, wobei
1.a) die Bramme bzw. das Band oder Blech (1) in einem ersten Schritt 1.a einer oder mehrerer Umformungen in einem eine Reihe von Walzgerüsten (3,4,5,6,7 bzw. F1, F2, F3, F4) umfassenden Warmwalzwerk (2) zur vollständigen Eliminierung der Gussstruktur und zur Erzeugung eines gleichmäßigen, feinen, rekristallisierten Austenitgefüges mit einer Korngröße von 40 µm ± 20 µm, und bei mikrolegierten Stählen von 30 µm ± 10 µm, unterzogen wird, wobei am Ende dieses Schrittes zugegebene Mikro-Legierungselemente > 90 % des jeweiligen Analysegehaltes in Lösung gegangen sind, und
2) die Bramme bzw. das Band oder Blech (1) dann in einem zweiten Schritt zur Erzeugung eines feinkörnigen Gefüges, bei dem keine einzelnen groben Körner oder größere Gefügebereiche vorliegen, deren Korngrenzen und/oder Substruktur durch Kleinwinkelkorngrenzen gekennzeichnet sind, einer Abkühlung unterzogen wird
wobei zwischen mindestens zwei Walzgerüsten (3, 4, 5, 6) des Warmwalzwerks (2) bei der Durchführung des Schritts a) die Bramme bzw.
das Band oder 'Blech (1) einer Erhitzung unterzogen wird, und wobei zumindest in dem in Walzrichtung (W) ersten Walzgerüst (3), vorzugsweise ein Vorgerüst (F0), die obere und unterer Arbeitswalze (F0a, F0b) Ober separate Antriebe angetrieben wird, wobei direkt nach dem Austritt aus dem Vorgerüst F0 das Band in eine Induktionsheizung (8) und anschließend mittels wenigstens einem Treiberrollenpaar gezogen wird, und
die Bramme bzw. das Band oder Blech (1) in einem Schritt 1.b zwischen den Schritten 1.a) und 2) einer oder mehreren Umformungen des rekristallisierten, austenitischen Gefüges zur Erzeugung eines flachgestreckten, versetzungsreichen Austenitgefüges unterzogen wird und wobei die Erhitzung bis in den rekristallisierenden Temperaturbereich, insbesondere bis zur vollständigen Rekristallisation erfolgt.

2. Verfahren nach einem der Ansprüche 1,
**dadurch gekennzeichnet,**
**dass** nach der Erhitzung des Bandes oder des Blechs (1) eine Zunderwäsche erfolgt.

3. Verfahren nach einem der Ansprüche 1 bis 2,
**dadurch gekennzeichnet,**
**dass** das Band oder Blech (1) vor der Erhitzung geschopft wird, insbesondere der Bandanfang oder Blechanfang und/oder das Bandende oder das Blechende abgeschnitten werden.

4. Verfahren nach einem der Ansprüche 1 bis 3,
**dadurch gekennzeichnet,**
**dass** die Umformschritte, bestehend aus den Teilschritten 1.a und vorzugsweise 1.a zusammen mit 1.b, gekoppelt sind, wobei alle beteiligten Gerüste nach dem Brammen bzw. Zwischenbandeinlauf gleichzeitig mit den Brammen bzw. mit dem Zwischenband im Eingriff.

5. Verfahren nach Anspruch 4,
**dadurch gekennzeichnet,**
**dass** die einzelnen Gerüste aufgefahren werden können.

6. Warmwalzwerk (2) zum Warmwalzen eines Metallbandes oder -blechs (1), insbesondere eines Stahlbandes oder -blechs, wobei das Warmwalzwerk (2) mindestens zwei in Walzrichtung (W) aufeinander folgend angeordnete Walzgerüste (3, 4, 5, 6, 7) aufweist, in denen jeweils die Bramme bzw. das Band oder Blech (1) einer Umformung unterzogen werden kann, insbesondere zur Durchführung des Verfahrens nach einem der Ansprüche 1 bis 5, aufweisend:
eine Heizung (8, 9, 10) zur Erwärmung des Walzgutes die zwischen mindestens zwei der mindestens zwei Walzgerüste (3, 4, 5, 6) angeordnet ist,
**gekennzeichnet durch**,
wenigstens ein Treiberrollenpaar, das in Walzrichtung (W) hinter der Induktionsheizung (8, 9, 10) angeordnet ist, und
separate Antriebe für die obere und untere Arbeitswalze (F0a, F0b) für zumindest das in Walzrichtung (W) erste Walzgerüst (3), vorzugsweise ein Vorgerüst (F0), (F0a, F0b).

7. Warmwalzwerk nach Anspruch 6,
**dadurch gekennzeichnet,**
**dass** die Heizung (8, 9, 10) als Induktionsheizung, insbesondere als Induktionsheizung mit bis zu vier Induktorelementen ausgebildet ist.

8. Warmwalzwerk nach Anspruch 6 oder 7,
**dadurch gekennzeichnet,**
**dass** zwischen zwei weiteren Walzgerüsten (6, 7) oder nach mindestens einem weiteren Walzgerüst (6) eine Kühlstrecke (11) für die Bramme bzw. das Band oder Blech (1) angeordnet ist, insbesondere dass in Walzrichtung (W) unmittelbar hinter der Heizung (8, 9, 10) eine Kühlstrecke (11) für die Bramme bzw. das Band oder Blech (1) angeordnet ist.

## Claims

1. Method of hot rolling a metal strip (1) or metal sheet, particularly a steel strip or steel sheet, wherein
1.a) the slab or the strip or sheet (1) is subjected in a first step 1.a to one or more reshaping actions in a hot-rolling mill (2), which comprises series of roll stands (3, 4, 5, 6, 7 or F1, F2, F3, F4), for complete elimination of the casting structure and for producing a uniform, fine, recrystalised austenitic structure with a grain size of 40 microns ± 20 microns and, in the case of the micro-alloyed steels, of 30 microns ± 10 microns, wherein at the end of this step added micro-alloying elements have gone into solution to the extent of more than 90% of the respective analysis content, and
2) the slab or the strip or sheet (1) is then subjected in a further step to cooling for producing a fine-grain structure, in which no individual coarse grains or larger structure regions are present, the grain boundaries and/or sub-structure of which is or are **characterised by** small-angle grain boundaries,
wherein the slab or the strip or sheet (1) is subjected to heating between at least two roll stands (3, 4, 5, 6) of the hot rolling mill (2) during performance of the step a) and wherein at least in the roll stand (3) first in rolling direction, preferably a roughing stand (F0), the upper and lower working rolls (F0a, F0b) are driven by separate drives, wherein directly after exit from the roughing stand (F0) the strip is drawn into induction heating means (8) and subsequently by means of at least one drive roller pair, and
the slab or the strip or sheet (1) in a step 1.b between the steps 1.a) and 2) undergoes one or more reshapings of the recrystallised austenitic structure for producing an extended area, high-dislocation austenite structure and wherein the heating is carried out up to the recrystallising temperature range, particularly up to complete recrystallisation.

2. Method according to claim 1, **characterised in that** scale washing is carried out after heating of the strip or the sheet (1).

3. Method according to any one of claims 1 to 2, **characterised in that** the strip or sheet (1) is cropped before heating, in particular the strip start or sheet start and/or the strip end or the sheet end is or are cut off.

4. Method according to any one of claims 1 to 3, **characterised in that** the reshaping steps, consisting of the part steps 1.a and preferably 1.a together with 1.b, are coupled, wherein all participating stands after the slab or intermediate strip entry engage the slab or intermediate strip simultaneously.

5. Method according to claim 4, **characterised in that** the individual stands can be opened up.

6. Hot rolling mill (2) for hot rolling a metal strip or metal sheet (1), particularly a steel strip or steel sheet, wherein the hot rolling mill (2) comprises at least two roll stands (3, 4, 5, 6, 7), which are successive in rolling direction (W) and in each of which the slab or the strip or sheet (1) can be subjected to a reshaping action, particularly for performance of the method according to any one of claims 1 to 5, comprising
a heating means (8, 9, 10) for heating the rolling stock, which heating means is arranged between at least two of the at least two roll stands (3, 4, 5, 6), **characterised by**
at least one drive roller pair, which is arranged behind the heating means (8, 9, 10) in rolling direction (W), and
separate drives for the upper and lower working rolls (F0a, F0b) for at least the first roll stand (3) in rolling direction (W), preferably a roughing stand (F0), F0a, F0b).

7. Hot rolling mill according to claim 6, **characterised in that** the heating means (8, 9, 10) is constructed as induction heating means, particularly as induction heating means with up to four inductor elements.

8. Hot rolling mill according to claim 6 or 7, **characterised in that** a cooling path (11) for the slab or the strip or sheet (1) is arranged between two further roll stands (6, 7) or after at least one further roll stand (6), in particular directly behind the heating means (8, 9, 10) in rolling direction (W).

## Revendications

1. Procédé pour le laminage à chaud d'une bande ou d'une tôle métallique (1), en particulier d'une bande ou d'une tôle en acier, dans lequel
1.a) on soumet la brame, respectivement la bande ou la tôle (1) dans une première étape 1a à une ou plusieurs déformations dans un laminoir à chaud (2) comprenant une série de cages de laminoir (3, 4, 5, 6, 7, respectivement F1, F2, F3, F4) pour l'élimination complète de la structure de coulée et pour l'obtention d'une texture d'austénite uniforme, fine, recristallisée possédant une granulométrie de 40 µm ± 20 µm, et dans le cadre d'aciers microalliés de 30 µm ± 10 µm, dans lequel, au terme de cette étape, des éléments de microalliage ajoutés, à concurrence de plus de 90 % de la teneur analytique respective, sont entrés en solution ; et
2) on soumet ensuite la brame, respectivement la bande ou la tôle (1) dans une deuxième étape à un refroidissement pour obtenir une texture à grains fins, dans laquelle on ne trouve aucun grain grossier individuel ou aucune zone de texture grossière, dont les limites de grains et/ou la sous-structure se caractérisent par des limites de grains formant de petits angles ;
dans lequel, entre au moins deux cages de laminoir (3, 4, 5, 6) du laminoir à chaud (2) lors de la mise en oeuvre de l'étape a), on soumet la brame, respectivement la bande ou la tôle (1) à un chauffage, et dans lequel, au moins dans la première cage de laminoir (3) dans la direction de laminage (W), de préférence dans une cage ébaucheuse (F0), on actionne les cylindres de travail supérieur et inférieur (F0a, F0b) via des entraînements séparés, dans lequel, directement après sa sortie de la cage ébaucheuse (F0), on soumet la bande à un chauffage par induction (8) et on l'étire ensuite au moyen d'au moins une paire de galets d'entraînement ; et
on soumet la brame, respectivement la bande ou la tôle (1) dans une étape 1.b, entre les étapes 1.a) et 2), à une ou plusieurs déformations de la texture austénitique recristallisée pour obtenir une texture d'austénite étirée à plat, riche en dislocations, et dans lequel le chauffage s'étend jusque dans la plage de températures de recristallisation, en particulier s'étend jusqu'à la recristallisation complète.

2. Procédé selon la revendication 1, **caractérisé en ce qu'**on procède, après le chauffage de la bande ou de la tôle (1) à un lavage de calamine.

3. Procédé selon l'une quelconque des revendications 1 à 2, **caractérisé en ce qu'**on soumet la bande ou la tôle (1) avant le chauffage à un éboutage, en particulier on coupe l'amorce de la bande ou l'amorce de la tôle et/ou la fin de la bande ou la fin de la tôle.

4. Procédé selon l'une quelconque des revendications 1 à 3, **caractérisé en ce que** les étapes de transformation, constituées par les étapes partielles 1.a et de préférence 1.a conjointement avec 1.b, sont couplées, toutes les cages concernées étant engrenées, après l'entrée de la brame, respectivement de la bande intermédiaire, simultanément avec les brames, respectivement avec la bande intermédiaire.

5. Procédé selon la revendication 4, **caractérisé en ce qu'**on peut mettre en batterie les cages individuelles.

6. Laminoir à chaud (2) pour le laminage à chaud d'une bande ou d'une tôle métallique (1), en particulier d'une bande ou d'une tôle d'acier, dans lequel le laminoir à chaud (2) présente au moins deux cages de laminoir (3, 4, 5, 6, 7) qui se suivent respectivement dans la direction de laminage (W), dans lesquelles on peut soumettre chaque fois la brame, respectivement la bande ou la tôle (1) à une déformation, en particulier pour la mise en oeuvre du procédé selon l'une quelconque des revendications 1 à 5, présentant :
un chauffage (8, 9, 10) pour le chauffage du produit à laminer, qui est disposé entre au moins deux desdites au moins deux cages de laminoir (3, 4, 5, 6) ;
**caractérisé par** au moins une paire de galets d'entraînement, qui est disposée, dans la direction de laminage (W), derrière le chauffage par induction (8, 9, 10), et des entraînements séparés pour les cylindres de travail supérieur et inférieur pour au moins la première cage de laminoir (3) dans la direction de laminage (W), de préférence une cage ébaucheuse (F0), (F0a, F0b).

7. Laminoir à chaud selon la revendication 6, **caractérisé en ce que** le chauffage (8, 9, 10) est réalisé sous la forme d'un chauffage par induction, en particulier sous la forme d'un chauffage par induction comprenant jusqu'à quatre éléments faisant office d'inducteurs.

8. Laminoir à chaud selon la revendication 6 ou 7, **caractérisé en ce que**, entre deux cages de laminoir ultérieures (6, 7) ou après au moins une cage de laminoir ultérieure (6), est disposé un tronçon de refroidissement (11) pour la brame, respectivement la bande ou la tôle (1), en particulier **en ce que**, dans la direction de laminage (W), directement derrière le chauffage (8, 9, 10), est disposé un tronçon de refroidissement (11) pour la brame, respectivement la bande ou la tôle (1).
